Europäisches Patentamt

European Patent Office

Office européen des brevets

(19)

(11) **EP 1 648 106 A1**

(12) **EUROPEAN PATENT APPLICATION**

(43) Date of publication:
**19.04.2006 Bulletin 2006/16**

(51) Int Cl.:
*H04L 1/00* (2006.01)        *H04B 7/26* (2006.01)

(21) Application number: **04292457.1**

(22) Date of filing: **15.10.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(71) Applicant: **MELCO MOBILE COMMUNICATIONS
EUROPE
35510 Cesson Sevigne (FR)**

(72) Inventor: **Belaiche, V.
Melco Mobile Communications Europe
35510 Cesson-Sevigne (FR)**

(74) Representative: **Blot, Philippe Robert Emile et al
Cabinet Lavoix
2, place d'Estienne d'Orves
75441 Paris Cedex 09 (FR)**

(54) **Method and device for multiplexing a transport channel in flexible position**

(57)     The method for multiplexing at least one transport channel in flexible position comprises a step of distributing transport channels withing a first list (L) and a second list (R). It includes :

A) distributing the transport channels within :

- a set (ETCS) of explicitly detectable transport channels, and
- a set (GTCS) of guided transport channels,

B) for successively each transport channel of the set of explicitly detectable transport channels (ETCS) :

B1) calculating, for the first and second lists (L, R), a list criterion vector having a robustness index ($x_{i,2}$) depending on the transport channel robustness of the channels contained in the list, and
B2) distributing the current transport channel into the list having the current greatest robustness index, and by distributing in the same list, the or each guided channel for which the last dis-
tributed channel is a guiding channel.

FIG.2

EP 1 648 106 A1

**Description**

The present invention relates to a method for multiplexing at least one transport channel in flexible position, said method comprising a step of distributing said at least one transport channel within a first list and a second list.

The technical field is the one of the third generation telecommunication systems for mobile telephones.

The 3GPP (3rd Generation Partnership Project) committee is a standardization body, whose aim is the standardization of a third generation telecommunication system for mobile telephones. The technique adopted for these systems is the CDMA (Code Division Multiple Access) technique.

Both FDD (Frequency Division Duplex) and TDD (Time Division Duplex) modes, as known per se, are concerned.

The invention concerns in particular the so-called BTFD (Blind Transport Format Detection) technique which will be explained hereinafter.

The transport format of a transport channel comprises some semi-static part, like the TTI (Transmission Time Interval) duration, the CRC (Cyclic Redundancy Check) length, the rate matching attribute or the coding scheme, and some dynamic part consisting in the transport block size and transport block count (or transport block number). Such a dynamic part is representative of the transport channel bit rate. The TTI is a periodical time interval over which the transport format is selected for each transport channel, and over which spans the interleaving of the respective transport channel encoded data.

The semi-static part does not need to be detected by a mobile station, because the semi-static part is signalled to the mobile station by a network comprising at least one base station, in a phase of configuration of transport channels preceding the transmission of data through the transport channels. The dynamic part needs to be detected, as the dynamic part may change over time on a TTI per TTI basis. Classically, the operation of detecting the dynamic part is called "transport format detection".

The transport format detection may be based on explicit information, comprising TFCI (Transport Format Combination Indicator), transmitted along with the transport channels. But such a TFCI transmission takes some bandwidth and considerable system capacity.

Another technique is the BTFD (Blind Transport Format Detection) technique, where the UE (User Equipment) detects blindly the TF (Transport Format) for each transport channel, i.e. without the help of any TFCI (Transport Format Combination Indicator). The BTFD (Blind Transport Format Detection) technique is applicable under some restrictions that are listed within document 3GPP TS 25.212 V6.2.0 (2004-06) "3rd Generation Partnership Project; Technical Specification Group Radio Access Network; Multiplexing and channel coding (FDD) (Release 6)", section 4.3.1.

In section 4.3 of the cited Prior Art document, guided detection is defined. Guided detection means that the transport format $TF_A$ of some transport channel A, called the guided channel, can be derived from the knowledge of the transport format $TF_B$ of some other transport channel B, called the guiding channel.

In section 4.3.1 a, the single TF (Transport Format) detection technique is defined.

EP-1.104.126 describes a method for multiplexing at least two transport channels in flexible position for Blind Transport Format Detection.

In one embodiment of this method, transport channels are supposed to be listed in two ordered lists. This EP Patent document discloses a method for performing the ordering and the partitioning into two lists of the transport channels allowing to minimise the block error rate due to the dependence of one transport channel transport format detection over previously detected transport formats relating to other transport channel(s).

EP-1.104.126 only specifies that the TTI duration and transport channel robustness should be used for ordering the transport channels. However, neither method for determining the transport channel robustness, nor method for partitioning the transport channels into two lists is precisely described.

Furthermore, the case of how to order guided transport channels within the list is not fully addressed in the case that one guided transport channel would have several potential guiding transport channels.

Finally, the case of the single TF detection technique, that is to say a transport channel with only one transport format transmitting information, is not described within EP-1.104.126.

EP-1.104.126 describes a partitioning of transport channels into two lists which is not optimised with regard to minimising the impact of any transport format detection error of one transport channel within one of the two lists onto the transport format detection error(s) of subsequent transport channel(s) within the considered list. So the BLER (BLock Error Rate) target of the transport channel within the list may be not met if the previous transport channels have a significantly greater BLER target. This implies that the outer loop power control can raise the SIR (Signal-to-Interference Ratio) target to a higher level causing thus extra interferences to the telecommunication system and therefore capacity loss.

The aim of the invention is to actually minimise the impact of any transport format detection error concerning a previous transport channel of a list onto the transport format detection errors of subsequent transport channels of the list.

Accordingly, the subject of the invention is a method for multiplexing at least one transport channel in flexible position, said method comprising a step of distributing said at least one transport channel within a first list and a second list, characterized in that said step of distributing said at least one transport channel within said first list and said second list includes steps of :

A) distributing said at least one transport channel within :

- a set of none or at least one explicitly detectable transport channel and none or at least one transport channel to which one single transport format detection is applicable, as a first set, said first set comprising at least one transport channel to which one explicit blind transport format detection or one single transport format detection is applicable, each of said at least one transport channel comprised within said first set being likely to be one guiding transport channel, and
- a set of none or at least one guided transport channel, as a second set, the transport format of any guided transport channel comprised within said second set being deduced from the knowledge of a transport format of at least one other transport channel, each of said at least one other transport channel being one associated guiding transport channel,

B) calculating, for each of said at least one transport channel comprised within said first set, a vector of at least one transport channel criterion for ordering the considered transport channel within said first list or said second list, said transport channel criterion vector including at least one transport channel robustness criterion, said at least one transport channel robustness criterion being representative of a robustness of the considered transport channel,

C) selecting, from among said first set, one transport channel with the greatest transport channel criterion vector value, as a selected transport channel,

D) calculating, for each of said first list and said second list, a vector of at least one list criterion for selecting said first list or said second list, said list criterion vector including at least one list robustness criterion, said at least one list robustness criterion being representative of a robustness of the considered list,

E) selecting, from among said first list and said second list, one list with the greatest list criterion vector value, as a selected list,

F) distributing, within said selected list, said selected transport channel and then each of said at least one guided transport channel of said second set for which the lastly selected and distributed transport channel is an associated guiding transport channel, and

G) carrying out said step C) of selecting one other transport channel up to said step F) of distributing said other transport channel and each of said at least one other corresponding guided transport channel till said first set and said second set are both empty.

Other characteristics are listed in the sub-claims. More precisely :

- said transport channel criterion vector furthermore includes :

  • a flag, a value of said flag indicating whether the considered transport channel to be distributed within said first list and said second list transmits a Cyclic Redundancy Check for all its transport formats or not, and/or
  • a transport channel number, a value of said transport channel number being a value of the considered transport channel i to be distributed within said first list and said second list,

  and the distribution of said at least one transport channel within said first list and said second list is carried out according to a lexicographic order.
- said transport channel criterion vector furthermore includes a Transmission Time Interval duration criterion, and the distribution of said at least one transport channel within said first list and said second list is carried out according to an increasing Transmission Time Interval duration order.
- the distribution of said at least one transport channel within said first list and said second list is carried out successively according to said increasing Transmission Time Interval duration order and then a decreasing transport channel robustness criterion value order.
- said step A) of distributing said at least one transport channel within said first set and said second set includes a step of transferring any transport channel which is able to be included within both said first set and said second set to only said first set.
- said transport channel robustness criterion is determined according to the following formula :

$$x_{i,2} = RM_i \times g_i \; ;$$

where :

- RM$_i$ is a rate matching attribute of a transport channel i, and
- g$_i$ is a factor relating to said transport channel i, said factor g$_i$ being function of a coding scheme of said transport channel i.
- a value of said factor relating to said transport channel is given by the following table :

| g$_i$ | Coding scheme of a transport channel i |
|---|---|
| 128 | Convolutional ½ |
| 211 | Convolutional 1/3 |
| 298 | Turbo code |

- said list criterion vector for said first list and said list criterion vector for said second list are respectively initialised at a predetermined value.
- said step D) of calculating, for each of said first list and said second list, said list criterion vector comprises respectively a step of setting said list robustness criterion vector value to the smallest value among the current list robustness criterion vector value and the transport channel criterion vector value of the lastly selected and distributed transport channel.

Furthermore, the invention relates also to a device for multiplexing at least one transport channel in flexible position, said device comprising means for distributing said at least one transport channel within a first list and a second list, characterized in that said means for distributing said at least one transport channel within said first list and said second list includes means for:

A') distributing said at least one transport channel within :

- a set of none or at least one explicitly detectable transport channel and none or at least one transport channel to which one single transport format detection is applicable, as a first set, said first set comprising at least one transport channel to which one explicit blind transport format detection or one single transport format detection is applicable, each of said at least one transport channel comprised within said first set being likely to be one guiding transport channel, and
- a set of none or at least one guided transport channel, as a second set, the transport format of any guided transport channel comprised within said second set being deduced from the knowledge of a transport format of at least one other transport channel, each of said at least one other transport channel being one associated guiding transport channel,

B') calculating, for each of said at least one transport channel comprised within said first set, a vector of at least one transport channel criterion for ordering the considered transport channel within said first list or said second list, said transport channel criterion vector including at least one transport channel robustness criterion, said at least one transport channel robustness criterion being representative of a robustness of the considered transport channel,
C') selecting, from among said first set, one transport channel with the greatest transport channel criterion vector value, as a selected transport channel,
D') calculating, for each of said first list and said second list, a vector of at least one list criterion for selecting said first list or said second list, said list criterion vector including at least one list robustness criterion, said at least one list robustness criterion being representative of a robustness of the considered list,
E') selecting, from among said first list and said second list, one list with the greatest list criterion vector value, as a selected list,
F') distributing, within said selected list, said selected transport channel and then each of said at least one guided transport channel of said second set for which the lastly selected and distributed transport channel is an associated guiding transport channel, and

said means C') for selecting one other transport channel up to said means F') for distributing said other transport channel and each of said at least one other corresponding guided transport channel being implemented till said first set and said second set are both empty.

The invention will be better understood on reading the description which follows, given merely by way of example and while referring to the appended drawings, in which:

- figure 1 is a flow chart of the main stages of the claimed method ;
- figure 2 is a flow chart of the steps of the last stage of the claimed method of figure 1 dealing with the distribution of the transport channels into two lists.

The invention is used for example in a process for two-way multiplexing of blocks of symbols originating from transport channels in flexible positions comprising the phases of :

a) distributing the transport channels into first and second lists ;
b) concatenating the blocks of symbols of the transport channels of the first list, so as to produce a first partial multiplexing frame,
c) processing the blocks of symbols of the transport channels of the second list, so as to produce a second partial multiplexing frame, the processing phase comprising the following steps of:

c1) concatenating the blocks of symbols of the transport channels of the second list,
c2) inverting the order of the symbols in each of the concatenated blocks of symbols or in each of the blocks of symbols to be concatenated ; and

d) concatenating the first and second partial multiplexing frames.

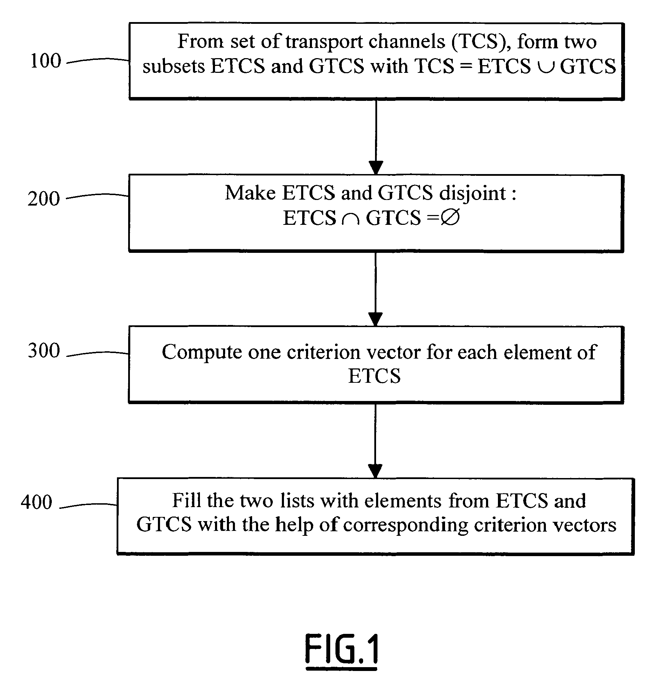

Such a process for two-way multiplexing of blocks of symbols originating from transport channels in flexible positions is described for a preferred embodiment within EP 1.104.126 with which, at least in part, the invention can be advantageously combined.
The following description mainly concerns the first phase consisting of distributing the transport channels into the first and the second lists which are denoted L and R, respectively.
The main stages of the invention method for multiplexing at least one transport channel in flexible position which is illustrated on figure 1 are as follows.
The set of transport channels of the considered CCTrCH (Coded Composite Transport Channels) is denoted TCS (Transport Channel set).
At stage 100, two subsets are formed which are a set ETCS of transport channels to which explicit blind transport format detection (also called explicit blind detection within document 3GPP TS 25.212 V6.2.0 (2004-06)) and/or "single TF detection" techniques is (are) applicable, and a set GTCS of transport channels to which guided detection is applicable.
The union of these two sets ETCS and GTCS is TCS, that is to say restriction on the CCTrCH ensures that at least one of the three techniques "explicit detection", "single TF detection" and "guided detection" is applicable.
Some transport channels may be in both sets ETCS and GTCS, that is to say that both guided detection and explicit blind transport format detection are applicable to one and the same transport channel.
Stage 200 consists in removing from GTCS all the elements of GTCS $\cap$ ETCS which denotes the intersection of sets GTCS and ETCS, which are therefore within both sets ETCS and GTCS.
After this step 200, GTCS and ETCS form a partition of TCS, that is to say their intersection is empty, and their union is equal to TCS, or more formally:

$$(\text{GTCS} \cap \text{ETCS} = \varnothing) \wedge (\text{GTCS} \cup \text{ETCS} = \text{TCS})$$

where GTCS $\cup$ ETCS denotes the union of sets GTCS and ETCS.
At stage 300, a vector $v_i = (x_{i,0}, x_{i,1}, x_{i,2}, x_{i,3}, x_{i,4})$ of five integers $x_{i,0}$, $x_{i,1}$, $x_{i,2}$, $x_{i,3}$ and $x_{i,4}$ is associated respectively to each transport channel i of the set ETCS of the considered CCTrCH. Such a vector is a criterion vector that is used to order one or several transport channels within first and second lists. This vector is defined as follows:

• $x_{i,0} = 0$
• $x_{i,1} = -F_i$ where $F_i$ is the duration of the TTI of transport channel i expressed as a number of radio frames.
• $X_{i,2} = RM_i \times g_i$ where $RM_i$ is the rate matching attribute of transport channel i, and $g_i$ is a factor which is function of the coding scheme of transport channel i given by table below:

| $g_i$ | coding scheme of transport channel i |
|---|---|
| 128 | Convolutional ½ |
| 211 | Convolutional $1/3$ |
| 298 | turbo code |

Although "explicit detection" technique is not applicable to turbo coded transport channels, "single TF detection" technique is applicable, and this is the reason why turbo code is mentioned within the hereinabove table. These $g_i$ values have been obtained by way of simulation under static propagation conditions, as known per se (for instance, like defined within the document 3GPP TS 25.101 v 6.4.0 (2004-03)), and are representative of the channel encoding coding gain, that is to say the difference of information bit energy that would be needed for un-encoded bits to get the same block error rate. Convolutional 1/3 is 2.17dB better than convolutional ½ (10*log10(211/128) = 2.17). Turbo-code is 1.5dB better than convolutional 1/3 (10*log10(298/211)=1.5). Static radio conditions are assumed as advanced technique like downlink transmit diversity or macro-diversity tend to flatten the channel, i.e. to remove fadings.

In alternative embodiments of the invention, the $g_i$ factor is a factor which is function of the coding scheme, or the TTI duration, and of some semi-static parameter v signalled from the network to the UE, common to the CCTrCH and representative of the channel speed. This function is for example defined by a predetermined lookup table or by some analytical formula. For instance, if parameter v takes three values "slow", "medium" and "fast", given that there are four possible TTI durations, and three possible coding schemes, the look up table would therefore comprise 3x4x3 = 36 entries.

The $RM_i$ is comprised within the semi-static part of the transport channel i transport format. The $RM_i$ is representative of rate matching gain, and, more precisely, of the puncturing or repetition ratio of the considered transport channel i. That is to say that there exists some factor LF independent of the transport channel, such that the factor $RF_i$ = LF x $RM_i$ is such that :

- if $RF_i$ < 1, substantially $(1-RF_i)\times 100$ % of the bits are punctured after channel encoding, and
- if $RF_i$ = 1, no bit is punctured or repeated after channel encoding, and
- if $RF_i$ > 1, substantially $(RF_i-1)\times 100$ % of the bits are repeated after channel encoding.

That means that the average information bit energy $Eb_i$ for transport channel i is multiplied by $RF_i$.

So, in a nutshell, the product $RM_i x g_i$ is representative of the robustness under static radio conditions of the channel encoded and rate matched transport channel i, as compared to those transport channels of the same CCTrCH. The robustness of a transport channel is experienced as lower bit error rates, and/or lower block error rates. Also, because a block error prevents a safe explicit blind transport format detection, or single transport format detection, the robustness of a transport channel is experienced as lower transport format detection error.

- $x_{i,3}$ = 1 if transport channel i transmits a CRC for all its transport format, $x_{i,3}$ = 0 otherwise ;
- $x_{i,4}$ = i is the transport channel number of transport channel i.

Concerning $x_{i,3}$, it is possible that a transport channel with "explicit detection" or "single TF detection" technique applicable may transmit at least a CRC not at all its transport formats, provided that the only transport format for which transport channel does not transmit a CRC is such that no transport block is transmitted.

In an alternative embodiment, the $X_{i,2}$ is substituted to $X_{i,3}$ in the preferred embodiment and $X_{i,3}$ is substituted to $X_{i,2}$.

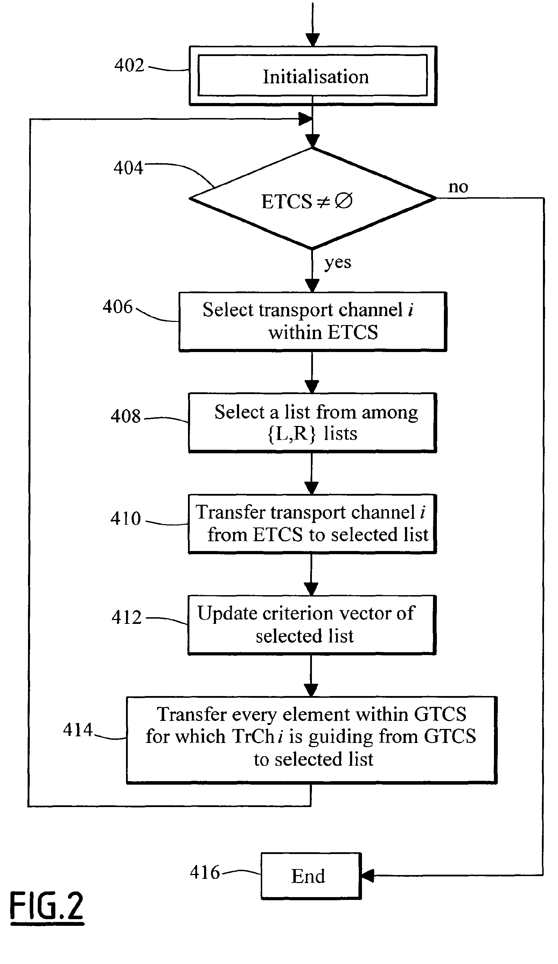

At stage 400, the L and R lists are filled with the elements originating from ETCS and GTCS with the algorithm, described hereinafter in reference to figure 2.

At step 402, an initialisation is performed. Initially, both lists L and R are empty. A criterion vector I for L list and a criterion vector r for R list are created. Initially, I is set to $l_0$, where $l_0$ = (2,0,0,0) for instance and r is set to $r_0$ where $r_0$ = (1,0,0,0) for instance.

While ETCS is not empty, as checked at step 404, the following steps are implemented.

At step 406, a transport channel is selected within ETCS. The selected transport channel is the element of ETCS with the greatest value of the criterion vector $v_i$ according to the lexicographic order, as known per se.

Thus, the values of the criterion vectors are compared one to another with the lexicographic order derived from the canonical order of integers.

Transport channel i can be determined non ambiguously because the last element of criterion vector $v_i$ is I and, therefore, when there are two different transport channels, there are two different criterion vector values, or if $i \neq j \Rightarrow v_i \neq v_j$.

At step 408, a list among lists L and R is selected so as to transfer the selected transport channel i from ETCS. To this aim, criterion vectors I and r of lists L and R are compared one to another with the lexicographic order derived from the canonical order of integers.

For example, if I<r, R list is selected otherwise L list is selected.

At step 410, the selected transport channel i is transferred from ETCS into the selected list L or R by removing transport channel i from set ECTS and appending transport channel i at the end of the selected list L or R.

At step 412, the criterion vector v of the selected list is updated by setting criterion vector v of the selected list to a function $f(v_i, v)$ of the transport channel criterion vector $v_i$ and the criterion vector of the selected list v.

In a first embodiment, $f(v_i, v) = (x_{i,0}, x_{i,2}, x_{i,3}, x_{i,4})$, where $x_{i,0}$, $X_{i,2}$, $X_{i,3}$, and $X_{i,4}$ are defined by the equation $v_i = (X_{i,0}, X_{i,1}, X_{i,2}, X_{i,3}, X_{i,4})$.

In a second embodiment, $f(v_i, v)$ is set to the minimum value of $(x_{i,0}, X_{i,2}, X_{i,3}, X_{i,4})$ and v for the lexical order, where $x_{i,0}$, $X_{i,2}$, $X_{i,3}$, and $X_{i,4}$ are defined by the equation $V_i = (X_{i,0}, X_{i,1}, X_{i,2}, X_{i,3}, X_{i,4})$.

At step 414, each of the transports channels from GTCS for which selected transport channel i of ETCS is a guiding channel is transferred into the selected list. Thus, every guided transport channel having possibly several potential guiding transport channels is transferred from GTCS after the first selected and distributed guiding transport channel within the selected list L or R.

To this aim, while GTCS contains a transport channel for which transport channel i is a guiding channel, the transport channel j which is selected is the element of GTCS with the least transport channel number j and for which transport channel i is a guiding channel.

The transport channel j is removed from GTCS and is appended at the end of the selected list.

Steps 406 to 414 are repeated until all the transport channels of ETCS have been selected and distributed within the lists L and R.

When ETCS is empty, all the transport channels have been added to the lists L and R at step 416.

The crux of the algorithm is the selection of a transport channel within ETCS with greatest criterion vector value at step 406. Since $X_{i,1} = -F_i$, the transport channels are selected in ascending order of the TTI duration. Therefore, at the end of the algorithm, the TTI duration of the transport channels increases with the position of the transport channels within the list. For instance, if transport channel B is before transport channel A within one of the two lists L and R, then TTI duration of A is at least equal to that of B.

This constraint of selecting the transport channels in ascending order of the TTI duration stems from this that, firstly, a transport format can be detected only when the corresponding TTI data was fully received, and, secondly, transport channels within the L or R list can be transport format detected only after their predecessors (or previous transport channels) within the same list, so if a longer TTI transport channel A was before a shorter TTI transport channel B within one of the lists L and R, then the shorter TTI channel B could deliver data only with the periodicity of the longer TTI. This would increase the transit delay and the memory requirement of transport channel B up to the same amount as if transport channel B had the same TTI duration as transport channel A, which is not acceptable, as if it had been acceptable that TTI duration would have been used in the first place, for longer TTIs provide more time diversity.

Another advantage of the selection of a transport channel i within ETCS performed in step 406, is that since $x_{i,2} = RM_i \times g_i$ is an indicator of the robustness of the considered transport channel i, so the transport channels are selected in descending order of their robustness.

So the invention method tends to the objective of minimising the impact of a transport format detection error of one transport channel on the reaching of BLER target of the subsequent transport channels within the list L or R.

Since the robustness of a list of transport channels is related to the likelihood that no transport channel in this list suffers a transport format detection error, then, the criteria *l* and r relative to the two lists L and R reflect the robustness of the corresponding lists L and R. Therefore, at step 408, the most robust list is selected amongst the two lists, which again tends towards the same objective of minimising the impact of a transport format detection error of one transport channel on the reaching of BLER target of the subsequent transport channels within the concerned list.

Criteria l and r reflect the robustness as they are updated as a function $f(v_i, v)$ of the current value v of the criterion vector of the selected list and that of the criterion of the last added (selected and then distributed) transport channel of ETCS, and, therefore, recursively, the criteria l and r depend on the robustness of all the transport channels that the corresponding list comprises.

The initial values $l_0$ and $r_o$ of criteria l and r of empty list reflect an infinite robustness, because $x_0 > 0$ in $l_0$ and $r_o$ while $x_{i,0} = 0$ for transport channels.

It has to be noted that the method of the invention, i.e. stages 100 through stages 400 are run at each CCTrCh reconfiguration, that is to say the assignment of transport channels to a selected list, L or R list, is semi-static. With such an assignment of transport channels to the selected list L or R, the BTFD is run dynamically at each shortest TTI.

The embodiment presented hereinabove is not intended to limit the scope of the invention, and, hence, numerous modifications may (nevertheless) be made thereto without departing from the context thereof.

**Claims**

**1.** Method for multiplexing at least one transport channel in flexible position, said method comprising a step of distributing said at least one transport channel within a first list (L) and a second list (R),
**characterized in that** said step of distributing said at least one transport channel within said first list (L) and said second list (R) includes steps of :

A) distributing (100, 200) said at least one transport channel within :

- a set (ETCS) of none or at least one explicitly detectable transport channel and none or at least one transport channel to which one single transport format detection is applicable, as a first set (ETCS), said first set (ETCS) comprising at least one transport channel to which one explicit blind transport format detection or one single transport format detection is applicable, each of said at least one transport channel comprised within said first set (ETCS) being likely to be one guiding transport channel, and
- a set (GTCS) of none or at least one guided transport channel, as a second set (GTCS), the transport format of any guided transport channel comprised within said second set (GTCS) being deduced from the knowledge of a transport format of at least one other transport channel, each of said at least one other transport channel being one associated guiding transport channel,

B) calculating (300), for each of said at least one transport channel comprised within said first set (ETCS), a vector ($v_i$) of at least one transport channel criterion for ordering the considered transport channel within said first list (L) or said second list (R), said transport channel criterion vector ($v_i$) including at least one transport channel robustness criterion ($X_{i,2}$), said at least one transport channel robustness criterion ($X_{i,2}$) being representative of a robustness of the considered transport channel,

C) selecting (406), from among said first set (ETCS), one transport channel

(i) with the greatest transport channel criterion vector value, as a selected transport channel (i),

D) calculating (412), for each of said first list (L) and said second list (R), a vector (I, r) of at least one list criterion for selecting said first list (L) or said second list (R), said list criterion vector (I,r) including at least one list robustness criterion, said at least one list robustness criterion being representative of a robustness of the considered list,

E) selecting (408), from among said first list (L) and said second list (R), one list with the greatest list criterion vector value, as a selected list,

F) distributing (410, 414), within said selected list, said selected transport channel (i) and then each of said at least one guided transport channel of said second set (GTCS) for which the lastly selected and distributed transport channel (i) is an associated guiding transport channel, and

G) carrying out said step C) of selecting one other transport channel up to said step F) of distributing said other transport channel and each of said at least one other corresponding guided transport channel till said first set (ETCS) and said second set (GTCS) are both empty (416).

2. Method according to claim 1, **characterized in that** said transport channel criterion vector furthermore includes :

- a flag ($x_{i,3}$), a value of said flag ($x_{i,3}$) indicating whether the considered transport channel to be distributed within said first list (L) and said second list (R) transmits a Cyclic Redundancy Check (CRC) for all its transport formats or not, and/or
- a transport channel number ($x_{i,4}$), a value of said transport channel number ($x_{i,4}$) being a value of the considered transport channel i to be distributed within said first list (L) and said second list (R),

and **in that** the distribution of said at least one transport channel within said first list (L) and said second list (R) is carried out according to a lexicographic order.

3. Method according to claim 1 or 2, **characterized in that** said transport channel criterion vector furthermore includes a Transmission Time Interval (TTI) duration criterion, and **in that** the distribution of said at least one transport channel within said first list (L) and said second list (R) is carried out according to an increasing Transmission Time Interval (TTI) duration order.

4. Method according to claim 3, **characterized in that** the distribution of said at least one transport channel within said first list (L) and said second list (R) is carried out successively according to said increasing Transmission Time Interval (TTI) duration order and then a decreasing transport channel robustness criterion value order.

5. Method according to any of the preceding claims, **characterized in that** said step A) of distributing said at least one transport channel within said first set (ETCS) and said second set (GTCS) includes a step (200) of transferring any transport channel which is able to be included within both said first set (ETCS) and said second set (GTCS) to only said first set (ETCS).

**6.** Method according to any of the preceding claims, **characterized in that** said transport channel robustness criterion ($X_{i,2}$) is determined according to the following formula :

$$x_{i,2} = RM_i \times g_i \, ;$$

where :

- $RM_i$ is a rate matching attribute of a transport channel i, and
- $g_i$ is a factor relating to said transport channel i, said factor $g_i$ being function of a coding scheme of said transport channel i.

**7.** Method according to claim 6, **characterized in that** a value of said factor $g_i$ relating to said transport channel i is given by the following table :

| $g_i$ | Coding scheme of a transport channel i |
|---|---|
| 128 | Convolutional ½ |
| 211 | Convolutional 1/3 |
| 298 | Turbo code |

**8.** Method according to any of the preceding claims, **characterized in that** said list criterion vector (I) for said first list (L) and said list criterion vector (r) for said second list (R) are respectively initialised at a predetermined value ($I_0$, ro).

**9.** Method according to claim 8, **characterized in that** said step D) of calculating, for each of said first list (L) and said second list (R), said list criterion vector comprises respectively a step of setting said list robustness criterion vector value to the smallest value among the current list robustness criterion vector value and the transport channel criterion vector value of the lastly selected and distributed transport channel.

**10.** Device for multiplexing at least one transport channel in flexible position, said device comprising means for distributing said at least one transport channel within a first list (L) and a second list (R), **characterized in that** said means for distributing said at least one transport channel within said first list (L) and said second list (R) includes means for:

A') distributing said at least one transport channel within :

- a set (ETCS) of none or at least one explicitly detectable transport channel and none or at least one transport channel to which one single transport format detection is applicable, as a first set (ETCS), said first set (ETCS) comprising at least one transport channel to which one explicit blind transport format detection or one single transport format detection is applicable, each of said at least one transport channel comprised within said first set (ETCS) being likely to be one guiding transport channel, and
- a set (GTCS) of none or at least one guided transport channel, as a second set (GTCS), the transport format of any guided transport channel comprised within said second set (GTCS) being deduced from the knowledge of a transport format of at least one other transport channel, each of said at least one other transport channel being one associated guiding transport channel,

B') calculating, for each of said at least one transport channel comprised within said first set (ETCS), a vector ($v_i$) of at least one transport channel criterion for ordering the considered transport channel within said first list (L) or said second list (R), said transport channel criterion vector ($v_i$) including at least one transport channel robustness criterion ($X_{i,2}$), said at least one transport channel robustness criterion ($X_{i,2}$) being representative of a robustness of the considered transport channel,

C') selecting, from among said first set (ETCS), one transport channel (i) with the greatest transport channel criterion vector value, as a selected transport channel (i),

D') calculating, for each of said first list (L) and said second list (R), a vector (I, r) of at least one list criterion for selecting said first list (L) or said second list (R), said list criterion vector (I,r) including at least one list robustness criterion, said at least one list robustness criterion being representative of a robustness of the considered list,

E') selecting, from among said first list (L) and said second list (R), one list with the greatest list criterion vector value, as a selected list,

F') distributing, within said selected list, said selected transport channel (i) and then each of said at least one guided transport channel of said second set (GTCS) for which the lastly selected and distributed transport channel (i) is an associated guiding transport channel, and

said means C') for selecting one other transport channel up to said means F') for distributing said other transport channel and each of said at least one other corresponding guided transport channel being implemented till said first set (ETCS) and said second set (GTCS) are both empty.

100 — From set of transport channels (TCS), form two subsets ETCS and GTCS with TCS = ETCS $\cup$ GTCS

200 — Make ETCS and GTCS disjoint : ETCS $\cap$ GTCS $=\varnothing$

300 — Compute one criterion vector for each element of ETCS

400 — Fill the two lists with elements from ETCS and GTCS with the help of corresponding criterion vectors

## FIG.1

402 — Initialisation

404 — ETCS ≠ ∅ — no

yes

406 — Select transport channel $i$ within ETCS

408 — Select a list from among {L,R} lists

410 — Transfer transport channel $i$ from ETCS to selected list

412 — Update criterion vector of selected list

414 — Transfer every element within GTCS for which TrCh$i$ is guiding from GTCS to selected list

416 — End

## FIG.2

**European Patent Office**

**EUROPEAN SEARCH REPORT**

Application Number

EP 04 29 2457

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 104 126 A (MITSUBISHI ELECTRIC TELECOM EUROPE) 30 May 2001 (2001-05-30)<br>* page 1, line 3 - page 3, line 54 *<br>* page 6, line 17 - page 7, line 6 *<br>* page 9, line 35 - line 50 *<br>* page 10, line 48 - page 11, line 4 *<br>* page 22, line 54 - page 23, line 10 *<br>* page 25, line 44 - page 27, line 28 *<br>----- | 1-10 | H04L1/00<br>H04B7/26 |
| A | EP 1 091 514 A (MITSUBISHI ELECTRIC TELECOM EUROPE ; MELCO MOBILE COMMUNICATIONS EUROP)<br>11 April 2001 (2001-04-11)<br>* abstract *<br>* page 1, line 1 - line 23 *<br>* page 1, line 48 - page 3, line 56 *<br>* page 4, line 24 - page 5, line 7 *<br>* page 5, line 49 - line 57 *<br>* page 7, line 53 - page 8, line 2 *<br>* page 9, line 27 - line 49 *<br>* page 11, line 45 - line 54 *<br>----- | 1-10 | |
| A | WO 03/079601 A (QUALCOMM, INCORPORATED)<br>25 September 2003 (2003-09-25)<br>* paragraph [0003] *<br>* paragraph [1028] - paragraph [1029] *<br>* paragraph [1039] *<br>* paragraph [1044] - paragraph [1045] *<br>* paragraph [1065] - paragraph [1067] *<br>-----<br>-/-- | 1-10 | TECHNICAL FIELDS SEARCHED (Int.Cl.7)<br>H04L<br>H04B |

The present search report has been drawn up for all claims

| Place of search | Date of completion of the search | Examiner |
|---|---|---|
| Munich | 31 March 2005 | Palacián Lisa, M |

EPO FORM 1503 03.82 (P04C01)

European Patent
Office

**EUROPEAN SEARCH REPORT**

Application Number

EP 04 29 2457

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | ETSI: "3GPP TS 25.212 version 6.2.0 Release 6"[Online] 1 June 2004 (2004-06-01), pages 1-77, XP002322786 SOPHIA ANTIPOLIS - FRANCE Retrieved from the Internet: URL:http://webapp.etsi.org/action/PU/20040 706/ts_125212v060200p.pdf> [retrieved on 2005-03-30] 4.2 General coding/multiplexing of TsCHs 4.2.3 Channel coding 4.2.8 TrCH multiplexing 4.2.14 Multiplexing of different transport channels into one CCTrCH 4.3 Transport format detection | 1-10 | |
| | ----- | | |
| | | | TECHNICAL FIELDS SEARCHED (Int.Cl.7) |

The present search report has been drawn up for all claims

| Place of search | Date of completion of the search | Examiner |
|---|---|---|
| Munich | 31 March 2005 | Palacián Lisa, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 1 648 106 A1**

**ANNEX TO THE EUROPEAN SEARCH REPORT
ON EUROPEAN PATENT APPLICATION NO.**

EP 04 29 2457

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2005

| Patent document cited in search report | | Publication date | Patent family member(s) | | Publication date |
|---|---|---|---|---|---|
| EP 1104126 | A | 30-05-2001 | FR | 2801450 A1 | 25-05-2001 |
| | | | CN | 1298261 A ,C | 06-06-2001 |
| | | | EP | 1104126 A1 | 30-05-2001 |
| | | | JP | 3450292 B2 | 22-09-2003 |
| | | | JP | 2001211140 A | 03-08-2001 |
| EP 1091514 | A | 11-04-2001 | FR | 2799320 A1 | 06-04-2001 |
| | | | CN | 1297292 A ,C | 30-05-2001 |
| | | | DE | 60017845 D1 | 10-03-2005 |
| | | | EP | 1091514 A1 | 11-04-2001 |
| | | | JP | 3435135 B2 | 11-08-2003 |
| | | | JP | 2001160988 A | 12-06-2001 |
| | | | US | 2004248582 A1 | 09-12-2004 |
| WO 03079601 | A | 25-09-2003 | US | 2003174676 A1 | 18-09-2003 |
| | | | AU | 2003220298 A1 | 29-09-2003 |
| | | | AU | 2003224690 A1 | 29-09-2003 |
| | | | AU | 2003233401 A1 | 29-09-2003 |
| | | | BR | 0308421 A | 15-03-2005 |
| | | | CA | 2479121 A1 | 25-09-2003 |
| | | | CA | 2479122 A1 | 25-09-2003 |
| | | | CA | 2479200 A1 | 25-09-2003 |
| | | | EP | 1514365 A2 | 16-03-2005 |
| | | | EP | 1483845 A2 | 08-12-2004 |
| | | | EP | 1483861 A1 | 08-12-2004 |
| | | | WO | 03079577 A2 | 25-09-2003 |
| | | | WO | 03079576 A2 | 25-09-2003 |
| | | | WO | 03079601 A1 | 25-09-2003 |
| | | | US | 2003174686 A1 | 18-09-2003 |
| | | | US | 2003174675 A1 | 18-09-2003 |

EPO FORM P0459

For more details about this annex : see Official Journal of the European Patent Office, No. 12/82